# EUROPEAN PATENT APPLICATION

(11) **EP 4 351 052 A1**
(43) Date of publication of application: **10.04.2024**
(21) Application number: 22831617.0
(22) Date of filing: 02.06.2022
(51) Int. Cl.: H04L 1/00, H04L 27/04

(54) **CODEWORD TRANSMISSION METHOD, BASE STATION, TERMINAL, AND STORAGE MEDIUM**

(30) Priority: 30.06.2021 CN 202110738998
(71) Applicant: ZTE Corporation, Shenzhen, Guangdong 518057 (CN)
(72) Inventor: WEI, Hao, Shenzhen, Guangdong 518057 (CN); HUANG, Jingyue, Shenzhen, Guangdong 518057 (CN); LI, Jie, Shenzhen, Guangdong 518057 (CN)
(74) Representative: Boult Wade Tennant LLP
(86) International application number: PCT/CN2022/096986
(87) International publication number: WO 2023/273796

(57) **Abstract**

The present application relates to the field of data processing, and provides a codeword transmission method, a base station, a terminal, and a storage medium. The method comprises: acquiring channel capacity and a number of channel layers of a channel; selecting, from a preset modulation and coding scheme (MCS) table according to the channel capacity and the number of channel layers, an MCS matching the channel and an MCS index corresponding to the MCS, wherein the MCS comprises transport layer modulation parameters and code rate parameters; processing, on transport layers of the channel, original codewords of the transport layers according to the transport layer modulation parameters and the code rate parameters, respectively, to obtain encoded and modulated codewords of the transport layers; and sending, by means of the transport layers of the channel, the encoded and modulated codewords of the transport layers and the MCS index to a terminal.

## Description

### CROSS-REFERENCE TO RELATED APPLICATIONS

The present application is filed based on and claims priority to Chinese Patent with the filing number of "202110738998.5" and the filing date of June 30, 2021, the entire contents of which are hereby incorporated into the present application by reference.

### TECHNICAL FIELD

Embodiments of the present application relate to the field of data transmission, in particular to a codeword transmission method, a base station, a terminal, and a storage medium.

### BACKGROUND

In a wireless communication system, the channel capacity increases with the increase of the number of antennas. A Multiple-In Multiple-Out (MIMO) system can transmit multiple layers of data on the same time-frequency resource by placing multiple antennas at the base station and the terminal separately. When multiple layers of data are transmitted, suitable modulation and coding schemes are designed for all layers to match the different channel qualities of the layers, so that the transmission capability of wireless channels can be fully utilised.

However, the conventional MIMO system supports transmission of at most 8 data layers and adopts single-codeword transmission in the range of 1-4 layers, and double-codeword transmission in the range of 5-8 layers. In the actual network deployment, the use scenarios of 5-8 layers are very limited, and in fact, most scenarios are single-codeword transmission. When multiple layers of data are transmitted, all parallel data layers send transport blocks adopting the same modulation and coding scheme, that is, the same code rate and modulation order are adopted. However, when the channel qualities of the transport layers are obviously different, the selected modulation and coding scheme cannot match the transmission capabilities of the transport layers, resulting in the loss of throughput when data transmission is performed on the transport layers.

### SUMMARY

An embodiment of the present application provides a codeword transmission method, including the following steps: acquiring channel capacity and a number of channel layers of a channel; selecting, from a preset modulation and coding scheme (MCS) table according to the channel capacity and the number of channel layers, an MCS matching the channel and an MCS index corresponding to the MCS, wherein the MCS includes transport layer modulation parameters and code rate parameters; processing, on transport layers of the channel, original codewords of the transport layers according to the transport layer modulation parameters and the code rate parameters, respectively, to obtain encoded and modulated codewords of the transport layers; and sending, by means of the transport layers of the channel, the encoded and modulated codewords of the transport layers and the MCS index to a terminal.

An embodiment of the present application further provides a codeword transmission method, including the following steps: receiving, by means of transport layers of a channel, encoded and modulated codewords of the transport layers and an MCS index sent by a base station side; selecting, from a preset modulation and coding scheme (MCS) table according to the MCS index, an MCS corresponding to the MCS index, wherein the MCS includes transport layer modulation parameters and code rate parameters; demodulating the encoded and modulated codewords of the transport layers according to the transport layer modulation parameters to obtain encoded codewords of the transport layers; determining, according to the code rate parameters and the number of bytes of the encoded codewords of the transport layers, a decoding mode, and decoding the encoded codewords of the transport layers to obtain original codewords of the transport layers.

An embodiment of the present application further provides a base station, including:
at least one processor; and
a memory in communication connection with the at least one processor; wherein,
the memory stores instructions executable by the at least one processor, and the instructions are executed by the at least one processor to enable the at least one processor to perform any one of the codeword transmission methods described above.

An embodiment of the present application further provides a terminal, including:
at least one processor; and
a memory in communication connection with the at least one processor; wherein,
the memory stores instructions executable by the at least one processor, and the instructions are executed by the at least one processor to enable the at least one processor to perform any one of the codeword transmission methods described above.

An embodiment of the present application further provides a computer-readable storage medium storing a computer program, wherein the computer program, when executed by a processor, implements any one of the above-mentioned codeword transmission methods described above.

### BRIEF DESCRIPTION OF THE DRAWINGS

One or more embodiments are illustrated by pictures in the drawings corresponding thereto, and these exemplary descriptions do not constitute limitations on the embodiments.
FIG. 1 is a first flowchart of a codeword transmission method provided by an embodiment of the present application;
FIG. 2 is a second flowchart of a codeword transmission method provided by an embodiment of the present application;
FIG. 3 is a third flowchart of a codeword transmission method provided by an embodiment of the present application;
FIG. 4 is a fourth flowchart of a codeword transmission method provided by an embodiment of the present application;
FIG. 5 is a fifth flowchart of a codeword transmission method provided by an embodiment of the present application;
FIG. 6 is a sixth flowchart of a codeword transmission method provided by an embodiment of the present application;
FIG. 7 is a structural schematic diagram of a base station provided by an embodiment of the present application; and
FIG. 8 is a structural schematic diagram of a terminal provided by an embodiment of the present application.

### DETAILED DESCRIPTION

The main purpose of the embodiments of the present application is to provide a codeword transmission method, a base station, a terminal, and a storage medium, aiming at enabling the selected modulation and coding scheme to match the transmission capability of transport layers when multiple layers of data are transmitted and increasing the throughput when data transmission is performed on the transport layers.

According to the codeword transmission method, the base station, the terminal, and the storage medium provided by the present application, when codeword transmission is performed, channel capacity and a number of channel layers of a channel are acquired; an MCS matching the channel and an MCS index corresponding to the MCS are selected from a preset modulation and coding scheme (MCS) table according to the channel capacity and the number of channel layers, wherein the MCS includes transport layer modulation parameters and code rate parameters; original codewords of the transport layers are processed on the transport layers of the channel according to the transport layer modulation parameters and the code rate parameters, respectively, to obtain encoded and modulated codewords of the transport layers; and the encoded and modulated codewords of the transport layers and the MCS index are sent to a terminal by means of the transport layers of the channel. Therefore, in the present application, two types of information including the channel capacity and the number of channel layers of the channel are used to match the code rate parameters and the transport layer modulation parameters of the MCS, such that the selected modulation and coding scheme matches the transmission capability of the channel, the throughput when data transmission is performed on the transport layers is increased, and the technical problem in the prior art that the selected modulation and coding scheme cannot match the transmission capability of the transport layers due to the fact that the transport layers adopt the same code rate and modulation order, so that there may be loss in throughput during data transmission is solved.

In order to make the objects, technical solutions and advantages of the embodiments of the present application clearer, the embodiments of the present application will be described in detail below with reference to the accompanying drawings. However, a person having ordinary skill in the art can appreciate that in order to make readers better understand the present application, numerous technical details are set forth in the embodiments of the present application. However, even without these technical details and various changes and modifications based on the following embodiments, the claimed technical solution can be implemented. The following embodiments are divided for convenience of description and should not be construed as limiting the specific implementations of the present application, and various embodiments can be referred to in conjunction with each other without contradiction.

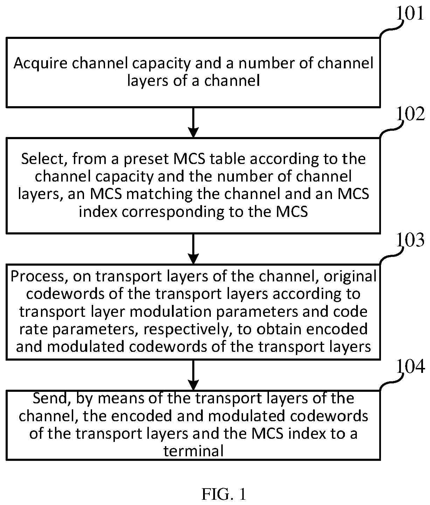

Embodiments of the present application relate to a codeword transmission method, as shown in FIG. 1, applied to a base station side, and specifically including the following steps:
Step 101, acquiring channel capacity and a number of channel layers of a channel.

Specifically, after establishing a connection with a terminal, the base station needs to acquire the channel capacity and the number of channel layers of a channel for data transmission with the terminal first, wherein the base station can actively measure the channel, or sends a channel measurement request to the terminal, which starts to measure the channel after receiving the channel measurement request and returns channel measurement results to the base station side. The channel measurement results obtained by the base station through active measurement or measurement by the terminal include the channel bandwidth, the channel signal-to-noise ratio and the number of channel layers. The channel capacity of the channel can be obtained based on the channel bandwidth and the channel signal-to-noise ratio.

Step 102, selecting, from a preset modulation and coding scheme (MCS) table according to the channel capacity and the number of channel layers, an MCS matching the channel and an MCS index corresponding to the MCS, wherein the MCS includes transport layer modulation parameters and code rate parameters.

Specifically, the modulation and coding scheme (MCS) table includes a plurality of MCSs, each MCS corresponds to one MCS index, one MCS includes two levels of attributes, the first level is the modulation parameters of the transport layers of the channel, and the second level is the code rate parameters of the channel, the modulation parameters of the transport layers of the channel are used to indicate which modulation mode to select on the transport layers of the channel, and the code rate parameters of the channel are used to indicate which coding mode to adopt the transport layers of the channel; when the MCS is selected according to the channel capacity and the number of channel layers, it is necessary to first select MCSs in which the number of the modulation parameters of the transport layers of the channel coincides with the number of channel layers according to the number of channel layers, and then select, from the MCSs conforming to the number of channel layers according to the channel capacity and the product of the corresponding modulation parameters of the transport layers of the channel and code rate parameters of the channel of the MCSs, an MCS matching the channel and an MCS index corresponding to the MCS.

Step 103, processing, on transport layers of the channel, original codewords of the transport layers according to the transport layer modulation parameters and the code rate parameters, respectively, to obtain encoded and modulated codewords of the transport layers.

Specifically, when codeword transmission is performed on the transport layers of the channel, the coding mode needs be determined first according to the code rate parameter and the number of bytes of the original codeword, because the code rate parameter is actually the compression ratio of the original codeword, and the compression amount of the original codeword can be calculated according to the compression ratio and the number of bytes of the original codeword, and the coding mode can be selected according to the compression amount, and then the encoded original codewords are modulated on the transport layers according to the modulation orders corresponding to the corresponding modulation parameters. After the original codewords on the transport layers are encoded and modulated, the encoded and modulated codewords of the transport layers for transmission can be obtained.

Step 104, sending, by means of the transport layers of the channel, the encoded and modulated codewords of the transport layers and the MCS index to a terminal.

Specifically, after the original codewords are encoded and modulated on the transport layers, the encoded and modulated codewords and the MCS index corresponding to the MCS used during encoding and modulation are together sent on the transport layers to the terminal, and after receiving the encoded and modulated codewords of the transport layers and the MCS index, the terminal will perform demodulating and decoding operation on the encoded and modulated codewords according to the MCS corresponding to the MCS index to recover the original codewords of the transport layers.

According to the embodiments of the present application, when codeword transmission is performed, channel capacity and the number of channel layers of a channel are acquired; an MCS matching the channel and an MCS index corresponding to the MCS are selected from a preset modulation and coding scheme (MCS) table according to the channel capacity and the number of channel layers, wherein the MCS includes transport layer modulation parameters and code rate parameters; original codewords of the transport layers are processed on the transport layers of the channel according to the transport layer modulation parameters and the code rate parameters, respectively, to obtain encoded and modulated codewords of the transport layers; and the encoded and modulated codewords of the transport layers and the MCS index are sent to a terminal by means of the transport layers of the channel. Therefore, in the present application, two types of information including the channel capacity and the number of channel layers of the channel are used to match the code rate parameters and the transport layer modulation parameters of the MCS, such that the selected modulation and coding scheme matches the transmission capability of the channel, the throughput when data transmission is performed on the transport layers is increased, and the technical problem in the prior art that the selected modulation and coding scheme cannot match the transmission capability of the transport layers due to the fact that the transport layers adopt the same code rate and modulation order, so that there may be loss in throughput during data transmission is solved.

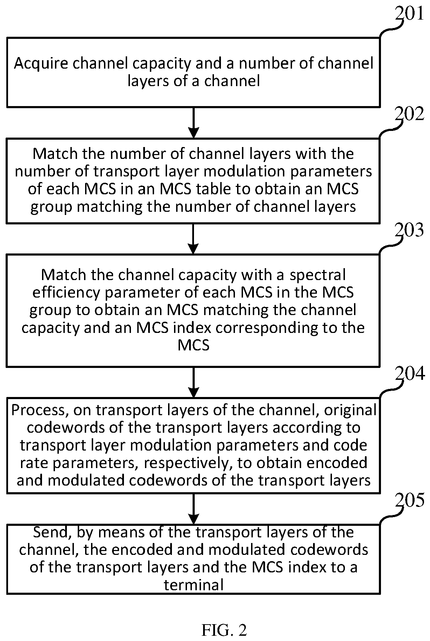

Embodiments of the present application relate to a codeword transmission method, as shown in FIG. 2, specifically including the following steps:
Step 201, acquiring channel capacity and a number of channel layers of a channel. Specifically, this step is substantially the same as the step 101 mentioned in the embodiments of the present application and will not be repeated here.
Step 202, matching the number of channel layers with the number of transport layer modulation parameters of each MCS in a preset modulation and coding scheme (MCS) table to obtain an MCS group matching the number of channel layers.

Specifically, as shown in Table 1, in addition to the modulation parameters of the transport layers of the channel and the code rate parameters of the channel mentioned in the embodiments of the present application, the MCS table can also include the spectral efficiency of the channel, the spectral efficiency is equal to the product of the sum of the modulation parameters and the code rate parameter, and since the number of the transport layer modulation parameters in the MCS table is uncertain, it is necessary to judge whether the number of the transport layer modulation parameters in the MCS table meets the requirements according to the number of channel layers acquired by the base station, and form the MCSs meeting the requirements into an MCS group.

**Table 1 Preset MCS Table**

| MCS index | Modulation parameter | | Code rate parameter | Spectral efficiency parameter |
|---|---|---|---|---|
| | First layer | Second layer | | |
| 0 | 2 | -- | 0.6631 | 1.3262 |
| 1 | 2 | 2 | 0.6631 | 2.6523 |
| 2 | 4 | -- | 0.6631 | 2.6523 |
| 3 | 4 | 2 | 0.6631 | 3.9785 |
| 4 | 4 | -- | 0.3320 | 1.3281 |
| 5 | 4 | 2 | 0.3320 | 1.9922 |
| 6 | 4 | 4 | 0.3320 | 2.6563 |

| | | | | |
|---|---|---|---|---|
| In the table, "--" indicates that no transmission is performed on the transport layer of the channel, and the modulation parameter of the previous layer needs to be greater than or equal to the modulation parameter of the next layer, wherein 4 indicates 16QAM modulation and 2 indicates QPSK modulation. | | | | |

Step 203, matching the channel capacity with the spectral efficiency parameter of each MCS in the MCS group to obtain an MCS matching the channel capacity and an MCS index corresponding to the MCS.

Specifically, the channel parameters in the MCS group meet the requirements of the terminal, but the channel capacity also needs to meet the requirements. The channel capacity of the channel corresponds to the spectral efficiency of the MCS. When the MCS is selected according to the channel capacity, the MCS having the spectral efficiency smaller than and closest to the channel capacity needs to be selected, and after the MCS is determined, the MCS index corresponding to the MCS needs to be acquired at the same time.

Step 204, processing, on the transport layers of the channel, original codewords of the transport layers according to the transport layer modulation parameters and the code rate parameters, respectively, to obtain encoded and modulated codewords of the transport layers.

Specifically, this step is substantially the same as the step 103 mentioned in the embodiments of the present application and will not be repeated here.

Step 205, sending, by means of the transport layers of the channel, the encoded and modulated codewords of the transport layers and the MCS index to the terminal.

Specifically, this step is substantially the same as the step 104 mentioned in the embodiments of the present application and will not be repeated here.

This embodiment can also select the MCS by two types of information including the number of channel layers and the channel capacity of the channel on the basis of other embodiments, so that the MCS can better match the channel transmission capability.

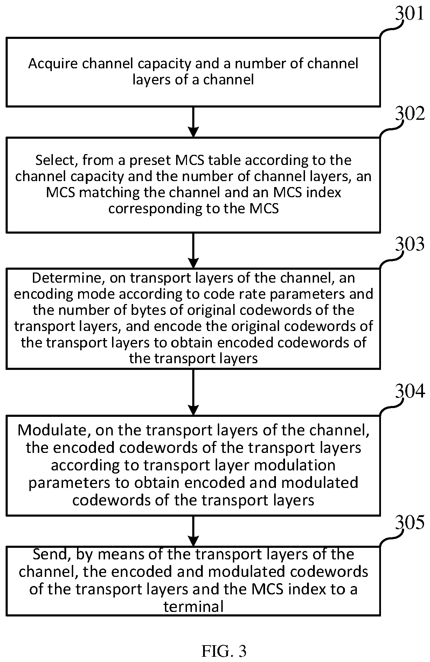

The embodiments of the present application relate to a codeword transmission method, as shown in FIG. 3, specifically including the following steps:
Step 301, acquiring channel capacity and a number of channel layers of a channel.

Specifically, this step is substantially the same as the step 101 mentioned in the embodiments of the present application and will not be repeated here.

Step 302, selecting, from a preset modulation and coding scheme (MCS) table according to the channel capacity and the number of channel layers, an MCS matching the channel and an MCS index corresponding to the MCS, wherein the MCS includes transport layer modulation parameters and code rate parameters.

Specifically, this step is substantially the same as the step 102 mentioned in the embodiments of the present application and will not be repeated here.

Step 303, determining, on the transport layers of the channel, an encoding mode according to the code rate parameters and the number of bytes of the original codewords of the transport layers, and encoding the original codewords of the transport layers to obtain encoded codewords of the transport layers.

Specifically, taking the MCS index being 3, the modulation parameters of the transport layers of the channel of the MCS being 4 and 2 (the modulation order corresponding to the modulation parameter of the first transport layer is 4 and the modulation order corresponding to the modulation parameter of the first transport layer is 2), and the code rate parameter of the MCS being 0.6631 as an example, when encoding and modulation are performed, the transport layers first need to acquire the corresponding encoding modes according to the original codewords to be transmitted and the code rate parameter of 0.66631, and only in this way can the original codewords that have been encoded can meet the code rate requirement.

Step 304, modulating, on the transport layers of the channel, the encoded codewords of the transport layers according to the transport layer modulation parameters to obtain encoded and modulated codewords of the transport layers.

Specifically, after the transport layers are encoded, the encoded original codewords are modulated according to the modulation parameters of the corresponding transport layers, such as 16QAM modulation is performed on the encoded original codewords on the transport layer 1, and QPSK modulation is performed on the encoded original codewords on the transport layer 2.

Step 305, sending, by means of the transport layers of the channel, the encoded and modulated codewords of the transport layers and the MCS index to a terminal.

Specifically, this step is substantially the same as the step 104 mentioned in the embodiments of the present application and will not be repeated here.

This embodiment can also modulate the encoded codewords on the basis of other embodiments to match the transmission capability of the channel so as to improve the throughput during data transmission.

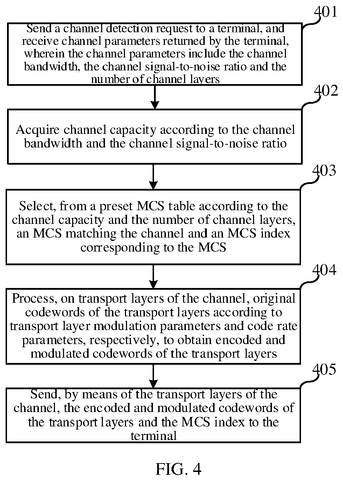

Embodiments of the present application relate to a codeword transmission method, as shown in FIG. 4, specifically including the following steps:
Step 401, sending a channel detection request to a terminal, and receiving channel parameters returned by the terminal, wherein the channel parameters include the channel bandwidth, the channel signal-to-noise ratio and the number of channel layers.

Specifically, after a base station sends a channel detection request to the terminal, the terminal will detect the channel and acquire the channel parameters of the channel. Specifically, the channel parameters can include the channel bandwidth, the channel signal-to-noise ratio, the number of channel layers, and the like.

Step 402, acquiring channel capacity according to the channel bandwidth and the channel signal-to-noise ratio.

Specifically, after the channel parameters returned by the terminal are received, the channel capacity of the channel needs to be calculated according to the channel bandwidth, the channel signal-to-noise ratio and Shannon formula.

Step 403, selecting, from a preset modulation and coding scheme (MCS) table according to the channel capacity and the number of channel layers, an MCS matching the channel and an MCS index corresponding to the MCS, wherein the MCS includes transport layer modulation parameters and code rate parameters.

Specifically, this step is substantially the same as the step 102 mentioned in the embodiments of the present application and will not be repeated here.

Step 404, processing, on transport layers of the channel, original codewords of the transport layers according to the transport layer modulation parameters and the code rate parameters to obtain encoded and modulated codewords of the transport layers.

Specifically, this step is substantially the same as the step 103 mentioned in the embodiments of the present application and will not be repeated here.

Step 405, sending, by means of the transport layers of the channel, the encoded and modulated codewords of the transport layers and the MCS index to the terminal.

Specifically, this step is substantially the same as the step 104 mentioned in the embodiments of the present application and will not be repeated here.

This embodiment can also actively send a detection request to a terminal on the basis of other embodiments so as to acquire the corresponding channel capacity and number of channel layers, thereby improving the flexibility of the present application.

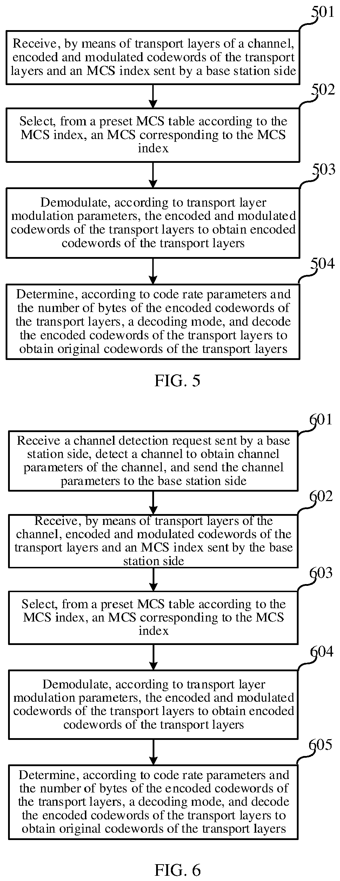

Embodiments of the present application relate to a codeword transmission method, as shown in FIG. 5, applied to a terminal side, and specifically including the following steps:
Step 501, receiving, by means of transport layers of a channel, encoded and modulated codewords of the transport layers and an MCS index sent by a base station side.

Specifically, after establishing a connection with the base station, the terminal can receive the encoded and modulated codewords and the MCS index sent by the base station by means of the transport layers of the channel connected with the base station.

Step 502, selecting, from a preset modulation and coding scheme (MCS) table according to the MCS index, an MCS corresponding to the MCS index, wherein the MCS includes transport layer modulation parameters and code rate parameters.

Specifically, the MCS table includes a plurality of MCSs, each MCS corresponds to one MCS index, one MCS includes two levels of attributes, the first level is the modulation parameters of the transport layers of the channel, and the second level is the code rate parameters of the channel, the modulation parameters of the transport layers of the channel are used to indicate which modulation mode is selected on the transport layers of the channel, and the code rate parameters of the channel are used to indicate which coding mode is used on the transport layers of the channel; in the MCS table, each MCS corresponds to one MCS index, and it can be known according to the MCS indexes how the base station encodes and modulates the original codewords.

Step 503, demodulating, according to the transport layer modulation parameters, the encoded and modulated codewords of the transport layers to obtain encoded codewords of the transport layers.

Specifically, after the MCS is determined, the encoded and modulated codewords of the transport layers are first processed by selecting a corresponding demodulation mode according to the modulation parameters of the transport layers to obtain the encoded codewords of the transport layers.

Step 504, determining, according to the code rate parameters and the number of bytes of the encoded codewords of the transport layers, a decoding mode, and decoding the encoded codewords of the transport layers to obtain original codewords of the transport layers.

Specifically, after the encoded codewords are obtained on the transport layers of the channel, the decoding mode is first determined according to the code rate parameters and the number of bytes of the encoded codewords, since the code rate parameter is actually the compression ratio of the original codeword, the number of bytes of the original codeword can be deduced according to the compression ratio and the number of bytes of the encoded codeword, and the decoding mode is selected according to the number of bytes of the original codeword.

Embodiments of the present application relate to a codeword transmission method, as shown in FIG. 6, applied to a terminal side, and specifically including the following steps:
Step 601, receiving a channel detection request sent by a base station side, detecting a channel to obtain channel parameters of the channel, and sending the channel parameters to the base station side.

Specifically, after establishing a connection with the base station, the terminal will first receive a channel detection request sent by the base station, detects a channel connected with the base station according to the channel detection request to obtain channel parameters of the channel, and then returns the channel parameters to the base station for processing by the base station side, wherein the channel parameters may include the channel bandwidth, the channel signal-to-noise ratio, the number of channel layers, and the like.

Step 602, receiving, by means of transport layers of the channel, encoded and modulated codewords of the transport layers and an MCS index sent by the base station side.

Specifically, this step is substantially the same as step 501 of the embodiments of the present application and will not be repeated here.

Step 603, selecting, from a preset modulation and coding scheme (MCS) table according to the MCS index, an MCS corresponding to the MCS index, wherein the MCS includes transport layer modulation parameters and code rate parameters.

Specifically, this step is substantially the same as step 502 of the embodiment of the present application and will not be repeated here.

Step 604, demodulating, according to the transport layer modulation parameters, the encoded and modulated codewords of the transport layers to obtain encoded codewords of the transport layers.

Specifically, this step is substantially the same as step 503 of the embodiment of the present application and will not be repeated here.

Step 605, determining, according to the code rate parameters and the number of bytes of the encoded codewords of the transport layers, a decoding mode, and decoding the encoded codewords of the transport layers to obtain original codewords of the transport layers.

Specifically, this step is substantially the same as step 504 of the embodiment of the present application and will not be repeated here.

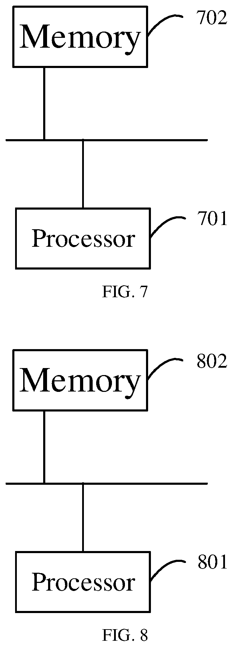

Embodiments of the present disclosure relate to a base station, as shown in FIG. 7, including:
at least one processor 701; and a memory 702 in communication connection with the at least one processor 701; wherein the memory 702 stores instructions executable by the at least one processor 701, and the instructions are executed by the at least one processor 701 to enable the at least one processor 701 to perform the codeword transmission method as described in any of the above method embodiments.

In this embodiment, the memory and the processor are connected through a bus, and the bus can include any number of interconnected buses and bridges, and the bus connects one or more processors and various circuits of the memory together. The bus can also connect various other circuits, such as peripheral devices, voltage regulators and power management circuits, which are well known in the art, and therefore, will not be described further here. A bus interface provides an interface between the bus and a transceiver. The transceiver can be one element or multiple elements, such as multiple receivers and transmitters, that provide a unit for communicating with various other devices over a transmission medium. The data processed by the processor is transmitted over the wireless medium through the antenna, which further receives the data and transmits the data to the processor.

The processor is responsible for managing the bus and general processing, and can also provide various functions including timing, peripheral interfaces, voltage regulation, power management and other control functions. The memory can be used for storing data used by the processor in performing operations.

Embodiments of the present disclosure relate to a terminal, as shown in FIG. 8, including:
at least one processor 801; and a memory 802 in communication connection with the at least one processor 801; wherein the memory 802 stores instructions executable by the at least one processor 801, and the instructions are executed by the at least one processor 801 to enable the at least one processor 801 to perform the codeword transmission method as described in any of the above method embodiments.

In this embodiment, the memory and the processor are connected through a bus, and the bus can include any number of interconnected buses and bridges, and the bus connects one or more processors and various circuits of the memory together. The bus can also connect various other circuits, such as peripheral devices, voltage regulators and power management circuits, which are well known in the art, and therefore, will not be described further here. A bus interface provides an interface between the bus and a transceiver. The transceiver can be one element or multiple elements, such as multiple receivers and transmitters, that provide a unit for communicating with various other devices over a transmission medium. The data processed by the processor is transmitted over the wireless medium through the antenna, which further receives the data and transmits the data to the processor.

The processor is responsible for managing the bus and general processing, and can also provide various functions including timing, peripheral interfaces, voltage regulation, power management and other control functions. The memory can be used for storing data used by the processor in performing operations.

Embodiments of the present application relate to a computer-readable storage medium storing a computer program. The computer program, when executed by a processor, implements the method embodiments described above.

That is, it can be understood by those skilled in the art that, implementing all or part of the steps in the above embodiment method can be performed by a program instructing related hardware, the program is stored in a storage medium and includes instructions for causing a device (which can be a single chip microcomputer, a chip, etc.) or a processor to execute all or part of the steps of the method according to the various embodiments of the present application. The aforementioned storage medium includes various media in which program codes can be stored, such as a USB flash disk, a mobile hard disk, a read-only memory (ROM), a random access memory (RAM), a magnetic disk, or an optical disk.

It will be understood by a person having ordinary skill in the art that the embodiments described above are specific embodiments for implementing the present application, and that in practice, various changes can be made in form and detail without departing from the principle of the present application.

## Claims

1. A codeword transmission method, applied to a base station , the method comprising:
acquiring channel capacity and a number of channel layers of a channel;
selecting, from a preset modulation and coding scheme (MCS) table according to the channel capacity and the number of channel layers, an MCS matching the channel and an MCS index corresponding to the MCS, wherein the MCS comprises transport layer modulation parameters and code rate parameters;
processing, on transport layers of the channel, original codewords of the transport layers according to the transport layer modulation parameters and the code rate parameters, respectively, to obtain encoded and modulated codewords of the transport layers; and
sending, by means of the transport layers of the channel, the encoded and modulated codewords of the transport layers and the MCS index to a terminal.

2. The codeword transmission method according to claim 1, wherein the code rate parameter of the MCS is associated with one or more of the transport layer modulation parameters, and when the code rate parameter is associated with a plurality of transport layer modulation parameters, a previous transport layer modulation parameter is greater than or equal to a next transport layer modulation parameter among the plurality of transport layer modulation parameters.

3. The codeword transmission method according to claim 1 or 2, wherein the MCS further comprises a spectral efficiency parameter;
selecting, from the preset modulation and coding scheme (MCS) table according to the channel capacity and the number of channel layers, the MCS matching the channel and the MCS index corresponding to the MCS comprises:
matching the number of channel layers with the number of transport layer modulation parameters of each MCS in the MCS table to obtain an MCS group matching the number of channel layers; and
matching the channel capacity with a spectral efficiency parameter of each MCS in the MCS group to obtain the MCS matching the channel capacity and the MCS index corresponding to the MCS.

4. The codeword transmission method according to any one of claims 1 to 3, wherein processing, on the transport layers of the channel, the original codewords of the transport layers according to the transport layer modulation parameters and the code rate parameters, respectively, to obtain the encoded and modulated codewords of the transport layers comprises:
determining, on the transport layers of the channel, an encoding mode according to the code rate parameters and the number of bytes of the original codewords of the transport layers, and encoding the original codewords of the transport layers to obtain encoded codewords of the transport layers; and
modulating, on the transport layers of the channel, the encoded codewords of the transport layers according to the transport layer modulation parameters to obtain encoded and modulated codewords of the transport layers.

5. The codeword transmission method according to any one of claims 1 to 4, wherein acquiring the channel capacity and the number of channel layers of the channel comprises:
sending a channel detection request to the terminal, and receiving channel parameters returned by the terminal, wherein the channel parameters comprise a channel bandwidth, a channel signal-to-noise ratio and the number of channel layers; and
acquiring the channel capacity according to the channel bandwidth and the channel signal-to-noise ratio.

6. A codeword transmission method, applied to a terminal, the method comprising:
receiving, by means of transport layers of a channel, encoded and modulated codewords of the transport layers and an MCS index sent by a base station ;
selecting, from a preset modulation and coding scheme (MCS) table according to the MCS index, an MCS corresponding to the MCS index, wherein the MCS comprises transport layer modulation parameters and code rate parameters;
demodulating, according to the transport layer modulation parameters, the encoded and modulated codewords of the transport layers to obtain encoded codewords of the transport layers; and
determining, according to the code rate parameters and the number of bytes of the encoded codewords of the transport layers, a decoding mode, and decoding the encoded codewords of the transport layers to obtain original codewords of the transport layers.

7. The codeword transmission method according to claim 6, wherein the method further comprises:
receiving a channel detection request sent by the base station ;
detecting the channel to obtain channel parameters of the channel; and
sending the channel parameters to the base station .

8. A base station, comprising: at least one processor; and
a memory in communication connection with the at least one processor; wherein,
the memory stores instructions executable by the at least one processor, and the instructions are executed by the at least one processor to enable the at least one processor to perform the codeword transmission method according to any one of claims 1 to 5.

9. A terminal, comprising: at least one processor; and
a memory in communication connection with the at least one processor; wherein,
the memory stores instructions executable by the at least one processor, and the instructions are executed by the at least one processor to enable the at least one processor to perform the codeword transmission method according to any one of claims 6 to 7.

10. A computer-readable storage medium, storing a computer program, wherein the computer program, when executed by a processor, implements the codeword transmission method according to any one of claims 1 to 5, or the codeword transmission method according to any one of claims 6 to 7.
